# EUROPÄISCHE PATENTANMELDUNG

(11) **EP 3 605 785 A1**
(43) Veröffentlichungstag der Anmeldung: **05.02.2020**
(21) Anmeldenummer: 19189170.4
(22) Anmeldetag: 30.07.2019
(51) Int. Cl.: H02J 7/00, E04G 21/08

(54) **TRAGVORRICHTUNG MIT EINEM ENERGIESYSTEM**

(30) Priorität: 31.07.2018 DE 102018118558
(71) Anmelder: Wacker Neuson Produktion GmbH & Co. KG, 85084 Reichertshofen (DE)
(72) Erfinder: Berger, Rudolf, 82031 Grünwald (DE); Steffen, Michael, 80796 München (DE); Glanz, Christian, 85221 Dachau (DE); Diller, Patrick, 85107 Baar-Ebenhausen (DE)
(74) Vertreter: Müller Hoffmann & Partner

(57) **Zusammenfassung**

Es wird ein Energiesystem angegeben, mit einem bewegbaren Tragrahmen (1), wenigstens einem von dem Tragrahmen (1) getragenen Energiespeicher (2) und mit wenigstens einer von dem Tragrahmen (1) getragenen Umformereinrichtung (3) zum Umformen eines von dem Energiespeicher (2) bezogenen elektrischen Stroms. Weiterhin kann wenigstens eine von dem Tragrahmen (1) getragene elektrische Anschlusseinrichtung zum Anschließen eines Verbrauchers vorgesehen sein.

## Beschreibung

Die Erfindung betrifft ein Energiesystem, insbesondere eine Tragvorrichtung mit einem Energiesystem als portable Antriebsenergiequelle für Elektrowerkzeuge bzw. elektrisch betriebene Arbeitsgeräte.

Es sind Energiesysteme mit Frequenzumformern bekannt, die zum Antrieb von zum Beispiel Innenrüttlern zur Betonverdichtung oder Außenrüttlern zur Betonverdichtung genutzt werden. Dabei werden die Frequenzumformer von einem Netzanschluss mit Netzstrom gespeist und wandeln den Netzstrom in einen geeigneten Antriebsstrom um. In der Regel wird dabei die Spannung vermindert, zum Beispiel auf 42 V, während die Frequenz des Wechselstroms erhöht wird, zum Beispiel von der Netzfrequenz auf 200 Hz.

Aus der DE 92 17 854 U1 ist z. B. ein Innenrüttler zur Betonverdichtung mit einem integrierten Frequenzumformer bekannt. Es sind aber auch Innenrüttler bekannt, bei denen der Frequenzumformer extern vorgesehen ist, so dass der Innenrüttler mit seinem Gerätestecker mit dem Frequenzumformer gekoppelt werden muss.

Die Frequenzumformer sind demnach auch häufig getrennt von dem eigentlichen Arbeitsgerät vorgesehen und können portabel sein. Dabei werden sie meist über lange Zuleitungskabel mit geeignetem Netzstrom versorgt. Dafür ist es erforderlich, auf den jeweiligen Baustellen elektrische Verteilerkästen bereitzustellen. Zudem müssen Schutzsysteme vorgesehen werden, um den Bediener insbesondere bei Fehlern in der elektrischen Isolation zuverlässig zu schützen. Dazu sind teure Sicherheitssysteme, wie zum Beispiel Trenntransformatoren, FI-Schalter, Isolationsüberwachungen etc. notwendig, um die elektrische Sicherheit von Personen auf einer Baustelle zu gewährleisten.

Die zur Versorgung der Frequenzumformer erforderlichen langen Zuleitungskabel stellen zudem eine Stolpergefahr da und können zum Beispiel in Armierungseisen verhaken. Weiterhin weisen die langen Verbindungskabel hohe Spannungsverluste sowie hohe kapazitive, induktive und ohmsche Verluste sowie Ableitströme (der aktiven Leiter zum Schutzleiter und Schirmungen) auf.

Der Erfindung liegt die Aufgabe zugrunde, die elektrische Versorgung für Frequenzumformer, die zum Bereitstellen eines geeigneten Stroms für Arbeitsgeräte genutzt werden, zu vereinfachen und hinsichtlich der Schutzmaßnahmen zu verbessern.

Die Aufgabe wird erfindungsgemäß durch ein Energiesystem mit den Merkmalen von Anspruch 1 gelöst. Vorteilhafte Ausgestaltungen sind in den abhängigen Ansprüchen definiert.

Es wird ein Energiesystem angegeben, mit einem bewegbaren Tragrahmen, wenigstens einem von dem Tragrahmen getragenen Energiespeicher und mit wenigstens einer von dem Tragrahmen getragenen Umformereinrichtung zum Umformen eines von dem Energiespeicher bezogenen elektrischen Stroms.

Der einen wesentlichen Bestandteil der Tragvorrichtung darstellende Tragrahmen kann in beliebiger Weise ausgeführt werden, zum Beispiel auch als Tragplatte, Traggestell o.ä.

Bei dem von dem Tragrahmen getragenen Energiespeicher kann es sich insbesondere um einen an sich bekannten wiederaufladbaren Akku, also eine wiederaufladbare elektrische Batterie, handeln. Von dem Tragrahmen wird weiterhin die Umformereinrichtung zum Umformen eines von dem Energiespeicher bezogenen elektrischen Stroms getragen. Der Energiespeicher liefert dabei insbesondere einen Gleichstrom, der durch den Umformer in geeigneter Weise bezüglich der Spannung und/oder der Frequenz umgeformt werden kann. Vor allem zum Ansteuern eines Drehstrommotors eines an die Tragvorrichtung anschließbaren Arbeitsgeräts (Verbraucher) ist es erforderlich, den Strom mit einer geeigneten Charakteristik an das Arbeitsgerät zu führen.

Typischerweise handelt es sich bei der Umformereinrichtung um einen an sich bekannten Frequenzumformer, der sowohl die Spannung als auch die Frequenz des von dem Energiespeicher gelieferten Gleichstroms wandeln kann, wodurch ein Wechselstrom mit höherer oder niedrigerer Spannung und geänderter Frequenz erzeugbar ist. Die Umformereinrichtung ist dabei mit dem Energiespeicher elektrisch verbunden.

Aus dem vom Energiespeicher kommenden Gleichstrom kann somit ein ein- oder mehrphasiger Strom mit Sonderfrequenz und/oder Sonderspannung erzeugt werden.

Unter einer Umformereinrichtung ist ein Bauelement zu verstehen, das Gleichstrom in einen Strom mit einer Frequenz größer Null umwandelt, also in einen Wechselstrom.

Weiterhin kann wenigstens eine von dem Tragrahmen getragene elektrische Anschlusseinrichtung zum Anschließen eines Verbrauchers vorgesehen sein. Bei dem Verbraucher handelt es sich insbesondere um ein Arbeitsgerät wie zum Beispiel ein Elektrowerkzeug, einen Innenrüttler zur Betonverdichtung etc. Die Anschlusseinrichtung kann zum Beispiel in der Art einer Steckdose oder einer Anschlussbuchse ausgeführt werden. Dabei können die Anschlusskontakte bedarfsweise unter einer öffenbare Klappe verborgen sein, um sie bei Nichtgebrauch vor äußeren Einwirkungen zu schützen. Das Arbeitsgerät kann mithilfe eines geeigneten Steckkontaktes (z. B. eines Steckers) an die Anschlusseinrichtung (z. B. die Steckdose) angeschlossen werden.

Die Anschlusseinrichtung kann bei einer Variante auch separat von dem Tragrahmen vorgesehen sein und z.B. über ein Kabel mit dem Tragrahmen bzw. der dort vorhandenen Umformereinrichtung elektrisch gekoppelt werden.

Die Anschlusseinrichtung kann eine oder auch mehrere Möglichkeiten zum Anschließen von einem oder auch mehreren Verbrauchern aufweisen. Dabei können insbesondere mehrere bzw. verschiedene Anschlussbuchsen vorgesehen sein, die z.B. auch unterschiedliche Spannungen oder Stromarten bereitstellen, um unterschiedliche Arbeitsgeräte anzuschließen.

Der Tragrahmen kann als Traggestell und/oder als Gehäuse ausgebildet sein. Insbesondere ist es zweckmäßig, wenn der Energiespeicher und die Umformereinrichtung leicht zugänglich daran befestigt sind. Das Gehäuse kann wasserdicht oder wenigstens spritzwassergeschützt ausgeführt sein.

Der Energiespeicher, die Umformereinrichtung und ggfs. die Anschlusseinrichtung können alle vom Tragrahmen getragen werden, wobei zur Erreichung dieses Zwecks auch Zwischenelemente, Befestigungseinrichtungen oder -elemente, Halteeinrichtungen, Aufnahmen etc. zum eigentlichen Befestigen dieser Komponenten an den Tragrahmen vorgesehen sein können. Es ist somit nicht zwingend erforderlich, dass der Energiespeicher unmittelbar auf dem Tragrahmen befestigt ist. Vielmehr kann er - wie auch die anderen Komponenten - in geeigneter Weise durch eine Befestigungseinrichtung mit dem Tragrahmen mechanisch gekoppelt sein.

Der Energiespeicher kann insbesondere wechselbar an dem Tragrahmen befestigt sein. Er ist dann einfach lösbar, gegebenenfalls ohne Zuhilfenahme weiterer Werkzeuge. Zum Beispiel kann er durch Betätigen einer Verriegelungseinrichtung, z.B. eines Riegels, durch einen Benutzer von dem Tragrahmen abgenommen und durch einen weiteren Energiespeicher ersetzt werden. Um einen zuverlässigen elektrischen Kontakt zwischen dem Energiespeicher und der dafür vorgesehenen Aufnahme sicherzustellen, kann es zweckmäßig sein, die Befestigung des Energiespeichers an dem Tragrahmen im Wege einer Einsteckbewegung durchzuführen.

Der Energiespeicher sowie der Tragrahmen können gegenseitig kompatible Schnellwechseleinrichtungen aufweisen, welche zumindest einen elektrischen Kontakt werkzeuglos herstellen. Dabei können die Schnellwechseleinrichtungen auch Mittel zum mechanischen Fixieren aufweisen, um ein wählbares werkzeugloses Schließen und Lösen der Verbindung zwischen Energiespeicher und Tragrahmen bzw. der dort vorgesehenen Energiespeicher-Aufnahme zu ermöglichen.

Die Einsteckbewegung kann z.B. von oben in einen durch die Aufnahme gebildeten Schacht erfolgen. Eine entsprechend entgegen gerichtete Aussteckbewegung erfolgt dann nach oben. In diesem Fall kann der Energiespeicher mit seinem gesamten Gewicht in der Aufnahme zuverlässig gehalten werden. Das Wechseln des Energiespeichers erfolgt nach oben über eine obere Öffnung der Aufnahme.

Ebenso kann auch eine horizontale Ein- und Aussteckbewegung zweckmäßig sein.

Der Energiespeicher und die Umformereinrichtung können eine bauliche Einheit bilden und zum Beispiel gemeinsam wechselbar an dem Tragrahmen befestigt sein. Die bauliche Einheit kann ihrerseits bei einer Variante ohne Werkzeug auflösbar sein, z.B. nach dem Ausbau aus dem Tragrahmen. Ebenso ist es aber auch möglich, dass die bauliche Einheit derart gestaltet ist, dass eine Auflösung und damit Trennung des Energiespeichers und der Umformereinrichtung nur mit einem Werkzeug, ggfs. nur durch einen Fachmann erfolgen kann.

Bei einer Variante können mehrere Energiespeicher und/oder mehrere Umformereinrichtungen von dem Tragrahmen getragen werden. Insbesondere die Energiespeicher können dabei eine einheitliche Bauart aufweisen, so dass sie beliebig in den Tragrahmen eingesetzt und gewechselt werden können. Das ist insbesondere vorteilhaft, um erschöpfte bzw. entleerte Energiespeicher leicht auswechseln zu können.

Bei einer weiteren Ausführungsform können wenigstens zwei Umformereinrichtungen von dem Tragrahmen getragen werden, die jeweils einen elektrischen Strom mit einer unterschiedlichen Sonderspannung und/oder einer unterschiedlichen Sonderfrequenz bereitstellen. Damit kann das Energiesystem unterschiedliche Verbraucher bzw. Arbeitsgeräte mit elektrischer Energie versorgen.

Es kann eine von dem Tragrahmen getragene Ladevorrichtung vorgesehen sein, zum elektrischen Laden des von dem Tragrahmen getragenen Energiespeichers. Mit Hilfe der Ladevorrichtung ist es somit möglich, den jeweiligen Energiespeicher direkt im Tragrahmen wieder aufzuladen. Bei der weiter oben beschriebenen Variante wurde hingegen vorgeschlagen, den entleerten Energiespeicher auszuwechseln und extern an einem separat vorgesehenen Ladegerät zu laden.

Es kann eine Energie-Anschlusseinrichtung vorgesehen sein, zum Anschließen des Energiesystems an eine externe Energiequelle. Dabei kann es sich zum Beispiel um ein Stromnetz oder um einen Generator oder eine andere Energiequelle (Brennkraftmaschine, Solarzelle, etc.) handeln. Die von dem Tragrahmen getragene Ladevorrichtung kann dann geeignet sein, um über die Energie-Anschlusseinrichtung an die externe Energiequelle angeschlossen zu werden, um auf diese Weise den vom Tragrahmen getragenen Energiespeicher aufzuladen).

Somit ergeben sich verschiedene Ladeszenarien. Mit Hilfe des externen, also unabhängig vom Tragrahmen vorgesehenen Ladegeräts kann der Energiespeicher an Netzspannung (Wechselspannung) oder Gleichspannung (DC-Spannung, z.B. von einem Lkw oder Pkw, sowie in Kombination mit einem Generator, einer Brennkraftmaschine oder einer oder mehreren Solarzellen) geladen werden. Mit Hilfe des internen, direkt am Tragrahmen getragenen Ladegeräts, sind analoge Ladeszenarien möglich, nämlich an Netzspannung oder DC-Spannung (z.B. von einem Lkw oder Pkw) sowie in Kombination mit einem Generator, einer Brennkraftmaschine oder einer oder mehreren Solarzellen.

An dem Tragrahmen kann eine Transporteinrichtung zum Transportieren des Energiesystems vorgesehen sein, wobei die Transporteinrichtung wenigstens eine der folgenden Komponenten aufweist: eine Kranhalterung (z.B. eine Kranöse), ein Fahrwerk und/oder ein oder mehrere Handgriffe. Die Kranhalterung ist dabei derart ausgebildet, dass ein Kranhaken zuverlässig befestigt werden kann, um das gesamte Energiesystem an die gewünschte Stelle zu heben. Mit Hilfe des Fahrwerks und gegebenenfalls der Handgriffe kann das Energiesystem an eine geeignete Stelle gerollt oder getragen werden.

Die Transporteinrichtung kann ein Fahrwerk aufweisen, mit wenigstens einem von einem Elektromotor angetriebenen Rad, wobei der Elektromotor und das Rad von dem Tragrahmen getragen werden und wobei die elektrische Energie für den Elektromotor von dem Energiespeicher bezogen wird. In diesem Fall ist das Energiesystem mit Hilfe des wenigstens einen elektromotorisch angetriebenen Rads leicht verfahrbar. Sinnvollerweise können auch zwei, drei, vier oder mehr Räder als Teil des Fahrwerks vorgesehen sein, von denen wenigstens eines, möglicherweise auch zwei oder mehr Räder elektromotorisch angetrieben werden. Damit lässt sich das gesamte Energiesystem komfortabel an die gewünschte Stelle verschieben. Die elektrische Energie wird dabei direkt von dem vom Tragrahmen getragenen Energiespeicher zugeführt.

Es kann vorgesehen sein, dass die Energie für den elektromotorischen Antrieb des mindestens einen Rads aus lediglich einem oder einer vorbestimmten Anzahl von Energiespeichern entnommen wird, nicht jedoch aus sämtlichen vorhandenen Energiespeichern. Der bzw. die verbleibenden Energiespeicher behalten so ihren Energiegehalt, um andere Funktionen mit Energie zu versorgen.

Anstatt des wenigstens einen Rades können auch andere Mittel zur Fortbewegung vorgesehen sein, wie z.B. mindestens eine Raupenkette bzw. Gleiskette. Der entsprechende Kettenantrieb kann seinerseits ebenfalls durch das eine Rad bzw. die mehreren Räder angetrieben werden.

Es kann eine Bedieneinrichtung vorgesehen sein, zum Bedienen von wenigstens einer der folgenden Funktionen: Schalten der Anschlusseinrichtung, Einstellen einer Stromspannung für die Anschlusseinrichtung, Einstellen einer Stromfrequenz für die Anschlusseinrichtung, Schalten einer elektrischen Verbindung zwischen dem Energiespeicher und der Umformereinrichtung. Mit der Bedieneinrichtung lassen sich somit die Ausgänge sowohl an- als auch ausschalten. Zudem können die Betriebsparameter, insbesondere die Stromparameter, in der gewünschten Weise eingestellt werden.

Die Bedieneinrichtung kann an dem Tragrahmen befestigt werden. Die Befestigung kann lösbar sein, damit zum Betrieb des Energiesystems die Energieeinrichtung abgenommen werden kann. Ebenso ist es auch möglich, die Energieeinrichtung vollständig extern vorzusehen, zum Beispiel als App auf einem Smartphone.

Es kann eine Anzeigeeinrichtung vorgesehen sein, zum Anzeigen von wenigstens einem Betriebszustand des Energiesystems, ausgewählt aus der Gruppe: durch die Bedieneinrichtung bewirkter Bedienzustand, Ladezustand des Energiespeichers, Schaltzustand der Anschlusseinrichtung, Stromspannung, Stromfrequenz. Wie die Bedieneinrichtung kann auch die Anzeigeeinrichtung von dem Tragrahmen getragen werden. Bedarfsweise kann sie auch abgenommen werden. Zudem ist es möglich, die Anzeigeeinrichtung auf einem Smartphone, zum Beispiel als App zu realisieren.

Wenn mehrere Energiespeicher durch den Tragrahmen getragen werden, können auch sämtliche Ladezustände über die Anzeigeeinrichtung angezeigt werden. Zudem ist es möglich, eine Laufzeit des Energiespeichers unter der Maßgabe einer Beibehaltung des aktuellen Stromverbrauchs hochzurechnen und über die Anzeigeeinrichtung anzuzeigen.

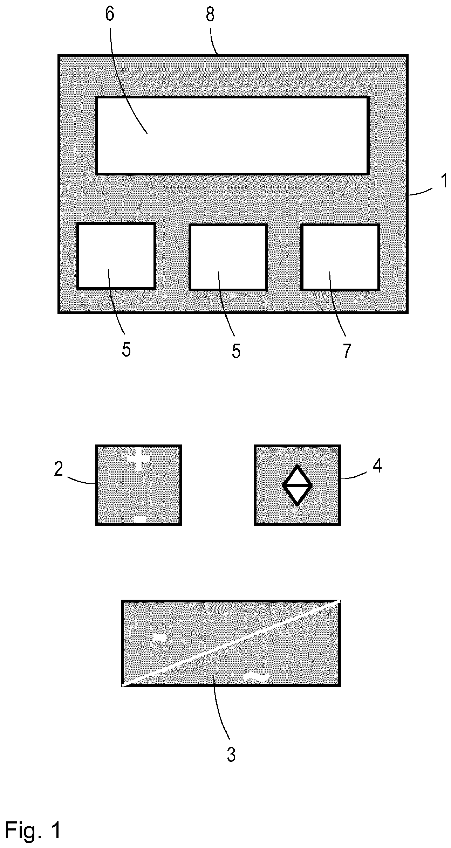

Diese und weitere Vorteile und Merkmale der Erfindung werden nachfolgend anhand eines Beispiels unter Zuhilfenahme der Figur 1 näher erläutert. Die Figur 1 zeigt in schematischer Darstellung ein Energiesystem mit einem Tragrahmen und verschiedenen einzelnen Komponenten.

Insbesondere zeigt die Figur 1 einen Tragrahmen 1 in stark schematisierter Darstellung. Der Tragrahmen 1 kann als Tragplatte oder Traggestell gestaltet sein. Auch ist es möglich, den Tragrahmen 1 als Gehäuse mit entsprechenden Gehäusewänden auszugestalten, um auf diese Weise die im Inneren des Tragrahmens 1 vorzusehenden Komponenten vor Wasser und Staub zu schützen.

In den Tragrahmen 1 können verschiedene Komponenten eingesetzt werden, nämlich ein als Energiespeicher dienender Akku 2, ein als Umformereinrichtung dienender Frequenzumformer 3 oder ein Ladegerät 4. Zu diesem Zweck sind in dem Tragrahmen 1 entsprechende Aufnahmen vorgesehen, nämlich mehrere Akkuaufnahmen 5, eine Umformeraufnahme 6 und eine Ladegerätaufnahme 7.

Insbesondere kann der Akku 2 zum Beispiel über einen z.B. vertikalen oder horizontalen Einführschlitz oder einen Einführschacht in die jeweilige Akkuaufnahme 5 von oben oder seitlich eingeschoben und damit wechselbar befestigt werden. Wenn der Akku entleert ist, kann er aus der Akkuaufnahme 5 entfernt und durch einen frischen Akku 2 ersetzt werden.

Dabei kann der Akku 2 mit Hilfe einer nicht dargestellten Verriegelungseinrichtung in der Akkuaufnahme 5 gehalten werden, so dass er in jeder Lage des Tragrahmens 1 zuverlässig gehalten wird. Die Verriegelungseinrichtung kann dazu zum Beispiel einen Riegel, eine Klappe, einen Zapfen o.ä. aufweisen, um den Akku 2 insbesondere formschlüssig in der Akkuaufnahme 5 zu halten.

Entsprechend können auch der Frequenzumformer 3 und das Ladegerät 4 in den jeweiligen Aufnahmen 6, 7 befestigt werden. Diese Komponenten können fest an dem Tragrahmen 1 angebaut sein, Ebenso können sie aber auch auswechselbar vorgesehen sein.

Weiterhin können an dem Tragrahmen 1 eine oder mehrere als Anschlusseinrichtung dienende, in der Figur 1 nicht gezeigte Steckdosen angebracht sein. Bei der Steckdose kann es sich um eine CEE-Steckdose handeln, an der ein entsprechendes, in der Figur 1 nicht gezeigtes Arbeitsgerät, wie z.B. ein Innenrüttler zur Betonverdichtung, angeschlossen werden kann. Insbesondere wird das Arbeitsgerät mit seinem ebenfalls in der Figur 1 nicht dargestellten Stecker in die Steckdose eingesteckt und auf diese Weise mit dem vom Frequenzumformer 3 bereitgestellten Wechselstrom in der geeigneten Frequenz versorgt.

Am oberen Ende des Tragrahmens 1 kann ein Traggriff 8 vorgesehen sein, um dem Benutzer das Tragen der Tragvorrichtung mit der Hand zu erleichtern. Der Traggriff 8 kann auch als Kranöse ausgeführt sein, um ein Heben des Tragrahmens mit einem Kranhaken zu ermöglichen.

## Patentansprüche

1. Energiesystem, mit
- einem bewegbaren Tragrahmen (1);
- wenigstens einem von dem Tragrahmen (1) getragenen Energiespeicher (2); und mit
- wenigstens einer von dem Tragrahmen (1) getragenen Umformereinrichtung (3) zum Umformen eines von dem Energiespeicher (2) bezogenen elektrischen Stroms.

2. Energiesystem nach Anspruch 1, mit wenigstens einer von dem Tragrahmen (1) getragenen elektrischen Anschlusseinrichtung zum Anschließen eines Verbrauchers.

3. Energiesystem nach einem der vorstehenden Ansprüche, wobei der Tragrahmen (1) als Traggestell und/oder als Gehäuse ausgebildet ist.

4. Energiesystem nach einem der vorstehenden Ansprüche, wobei der Energiespeicher (2) wechselbar an dem Tragrahmen (1) befestigt ist.

5. Energiesystem nach einem der vorstehenden Ansprüche, wobei mehrere Energiespeicher (2) und/oder mehrere Umformereinrichtungen (3) von dem Tragrahmen getragen werden.

6. Energiesystem nach einem der vorstehenden Ansprüche, wobei wenigstens zwei Umformereinrichtungen (3) von dem Tragrahmen (1) getragen werden, die jeweils einen elektrischen Strom mit einer unterschiedlichen Sonderspannung und/oder einer unterschiedlichen Sonderfrequenz bereitstellen.

7. Energiesystem nach einem der vorstehenden Ansprüche, wobei eine von dem Tragrahmen (1) getragene Ladevorrichtung (4) vorgesehen ist, zum elektrischen Laden des von dem Tragrahmen (1) getragenen Energiespeichers (2).

8. Energiesystem nach einem der vorstehenden Ansprüche, eine Energie-Anschlusseinrichtung vorgesehen ist, zum Anschließen des Energiesystems an eine externe Energiequelle.

9. Energiesystem nach einem der vorstehenden Ansprüche, wobei
- an dem Tragrahmen (1) eine Transporteinrichtung (8) zum Transportieren des Energiesystems vorgesehen ist; und wobei
- die Transporteinrichtung (8) wenigstens eine der folgenden Komponenten aufweist: eine Kranhalterung, ein Fahrwerk und/oder ein oder mehrere Handgriffe.

10. Energiesystem nach einem der vorstehenden Ansprüche, wobei
- die Transporteinrichtung ein Fahrwerk aufweist, mit wenigstens einem von einem Elektromotor angetriebenen Rad;
- der Elektromotor und das Rad von dem Tragrahmen (1) getragen werden; und wobei
- die elektrische Energie für den Elektromotor von dem Energiespeicher (2) bezogen wird.

11. Energiesystem nach einem der vorstehenden Ansprüche, wobei eine Bedieneinrichtung vorgesehen ist, zum Bedienen von wenigstens einer der folgenden Funktionen:
- Schalten der Anschlusseinrichtung
- Einstellen einer Stromspannung für die Anschlusseinrichtung
- Einstellen einer Stromfrequenz für die Anschlusseinrichtung
- Schalten einer elektrischen Verbindung zwischen dem Energiespeicher (2) und der Umformereinrichtung (3).

12. Energiesystem nach einem der vorstehenden Ansprüche, wobei eine Anzeigeeinrichtung vorgesehen ist, zum Anzeigen von wenigstens einem Betriebszustand des Energiesystems, ausgewählt aus der Gruppe
- durch die Bedieneinrichtung bewirkter Bedienzustand;
- Ladezustand des Energiespeichers;
- Schaltzustand der Anschlusseinrichtung;
- Stromspannung;
- Stromfrequenz.
